# EUROPEAN PATENT APPLICATION

(11) **EP 1 813 462 A1**
(43) Date of publication of application: **01.08.2007**
(21) Application number: 06118858.7
(22) Date of filing: 14.08.2006
(51) Int. Cl.: B60L 11/08, B66C 19/00, B66C 13/22, B66F 9/24

(54) **Energy-saving control system of rubber-tyred container gantry crane**

(30) Priority: 27.01.2006 CN 200610023728
(71) Applicant: Shanghai Zhenhua Port Machinery Co. Ltd., Shanghai District, Shanghai 200125 (CN)
(72) Inventor: He, Gang, Shanghai 200125 (CN); Bi, Qiang, Shanghai 200125 (CN); Tang, Junjie, Shanghai 200125 (CN); Gao, Qing, Shanghai 200125 (CN)
(74) Representative: Modiano, Micaela Nadia

(57) **Abstract**

An energy-saving control system of rubber-tyred container gantry crane, wherein the diesel engine-electric generator set is controlled to stop when the crane is idle, and a storage device is utilized to supply power to an auxiliary system of the crane, the system comprises: a monitor unit, a charger, a super capacitor, a capacitor monitor module and an inverter. A charge signal is transmitted by the monitor unit when the crane being at an idle state is decided, the charge signal is received by the capacitor monitor module thereby a charge start signal is transmitted to control the charging of the super capacitor by the charger; the diesel engine-electric generator set is controlled to stop or to slow down when the super capacitor has been fully charged being detected by the monitor unit, the super capacitor is used for supplying the power to the auxiliary system of the crane, the direct current of the super capacitor is converted by the inverter to alternating current for supplying the auxiliary system. The energy-saving control system allows RTG to turn off the diesel engine-electric generator set and to implement the operation intermittently, the oil-saving rate of the entire RTG can reach above 40%.

## Description

### Field of Invention

The invention relates to an energy-saving control system of the rubber-tyred container gantry crane.

### Background of Invention

As the oil price goes higher and higher, the fuel oil supply in the market also presents a tense up trend day by day. Meanwhile, the amount of the international trade in the world market becomes larger and larger so that the amount and the scale of the ports and wharves for the container shipping become larger and larger, correspondingly, the proportion of the fuel oil fee in the running cost of the wharf also becomes larger and larger, it can be seen from the statistical data that the fee of the diesel oil consumed by the rubber-tyred container gantry crane (Simplified as RTG) occupies a significant proportion. It is indicated by the field statistics that during the operation time period of RTG, the effective operation time on the stack field does not exceed 50%, while it is at a standby state in the other time period, at this time, the power supply for the auxiliary system on the crane, including the devices, such as the air conditioner, IT, the lightings and the sockets in the driving room, the air conditioner, IT, and lightings in the electricity room, the projector-type lamps on the small gantry, the footpath lamps of the machine, and the like, should be maintained, therefore it cannot stop the operation of the diesel engine-electric generator set. However, the load of the diesel engine-electric generator set at this time is rather small, the diesel engine-electric generator set supplies a large electricity power to the auxiliary system that only requires a little electric energy so that a large portion of the fuel oil is wasted. Although by adding a small auxiliary diesel engine-electric generator set can solve the problem of supplying the power to the auxiliary system during standby, but the oil consumption of small diesel engine is also considerable.

### Summary of the Invention

The object of the present invention is to provide an energy-saving control system of the rubber-tyred container gantry crane for addressing the above technical problem. It can control to stop the diesel engine-electric generator set while the crane is idle, and it utilizes an energy storage device to supply the power to the auxiliary system of the crane, so that it implements an intermittent operation of the diesel engine-electric generator set of RTG.

According to the present invention, providing an energy-saving control system of rubber-tyred container gantry crane, wherein the energy-saving control system controls the diesel engine-electric generator set to stop when the crane is idle, and supplies power on line to an auxiliary system of the crane by utilizing an energy storage device, said energy-saving control system comprising: a super capacitor, for applying the energy stored during the running period of the diesel engine-electric generator set to supplypower to the auxiliary system of the crane when the diesel engine-electric generator set is stopped; an inverter, connecting to the super capacitor and the auxiliary system, for converting the direct current of said the super capacitor to an alternating current for supplying the auxiliary system; a capacitor monitor module for generating a charge start signal when a charge signal is received or the voltage of the super capacitor is detected to be lower than a first predetermined value; a charger, being supplied by the diesel engine-electric generator set, for receiving the charge start signal and charging the super capacitor; and a monitor unit, for deciding the crane being at an idle state and transmitting the charge signal to the capacitor monitor module, and for controlling the diesel engine-electric generator set to stop or to slow down when it detects the super capacitor has been fully charged; after stopping or slowing down the diesel engine-electric generator set, the monitor unit controls the diesel engine-electric generator set to start or to operate at full speed when it detects the voltage of the super capacitor is lower than the first predetermined value.

According to an embodiment, the monitor unit decides the crane being at an idle state in response to an idle signal, which is generated by an energy-saving button disposed on the operation panel of the crane.

According to an embodiment, the monitor unit decides the crane being at an idle state upon no operation of the operation handle of the crane for a predetermined period, and generates the charge signal.

According to an embodiment, the monitor unit controls the diesel engine-electric generator set to start or at full speed in response to a recovery signal, which is generated by a recovery button disposed on the operation panel of the crane.

According to an embodiment, the system further comprises a static state switch, the super capacitor and the diesel engine-electric generator set are connected to the inverter via the static state switch, and the static state switch is controlled by the monitor unit; when one of the super capacitor and the diesel engine-electric generator set can not supply power, the static state switch will turn to the other. The static state switch is composed of a switching relay and a bi-directional thyristor being connected in parallel to the normal open contacts of the static state switch, the switching relay and bi-directional thyristor are controlled by the monitor unit.

According to an embodiment, the system further comprises a first contactor, the super capacitor is connected to the charger via the first contactor, and the first contactor is controlled by the capacitor monitor module. The capacitor monitor module is supplied by the diesel engine-electric generator set; when the capacitor monitor module obtains the power supply it detects that the voltage of the super capacitor is higher than the second predetermined value and it causes the first contactor to be closed, when the capacitor monitor module fails to obtain the power supply, it causes the first contactor to be opened.

According to an embodiment, the system further comprises a second contactor, the super capacitor is connected to the inverter via the second contactor, and the second contactor is controlled by the first contactor and a self-lock switch disposed in the monitor unit; when the first contactor and/or self-lock switch are closed, the second contactor is closed. The self-lock switch is closed when the closing of the second contactor caused by attraction is detected by the monitor unit, the self-lock switch is opened when the voltage of the super capacitor detected by the monitor unit is lower than a third predetermined value.

The operation flow process of the energy-saving control system of the rubber-tyred container gantry crane of the invention is as follows: after starting to run the diesel engine-electric generator set of RTG, the capacitor monitor module obtains the power supply and operates, the voltage of the super capacitor exceeds the second preset value, and the capacitor monitor module makes the first contactor be closed by attraction, thereby causing the second contactor to be closed by attraction, when the inverter obtains the power, it supplies power on line to the auxiliary system of RTG. When RTG is at a standby state, the driver who operates RTG can depress the above energy-saving switch to make the energy-saving control system enter into an energy-saving mode, the energy-saving control system can also decide the state that the RTG is at currently, for example, deciding that the operation handle has not been operated for several minutes, thereby it enters automatically into the energy-saving mode; in the energy-saving mode, a charge signal is transmitted to the capacitor monitor module by the monitor unit, and a charge start signal is further transmitted to the charger by the capacitor monitor module for charging the super capacitor, the monitor unit decides that the super capacitor has been charged fully through a method of detecting the voltage, then the monitor unit controls the diesel electric generator to a stopping state or a slowing down state. The direct current stored in the super capacitor is converted to a stable alternating operation power supply to be used by the auxiliary system by the inverter.

Under the condition that the electricity is generated by the diesel engine-electric generator set, when the voltage of the super capacitor is lower than said first preset value, a charge start signal is transmitted directly by the capacitor monitor module to allow the super capacitor to be charged by the charger until the super capacitor has charged to a sufficient electric energy, then the charge start signal is stopped to be transmitted by the capacitor monitor module, and the power is supplied continuously to the auxiliary system by the super capacitor, and cycling as this.

Under an energy-saving mode, when the voltage of the super capacitor is lower than said first preset value or the driver requires to operate and depresses the recovery switch, the diesel engine-electric generator set will be started automatically by the monitor unit to a normal operational rotation speed, a charge signal will be transmitted to the capacitor monitor module by the monitor unit, and a charge start signal will be further transmitted to the charger by the capacitor monitor module for charging the super capacitor.

The energy-saving control system of the rubber-tyred container gantry crane in the invention supplies power to the auxiliary system by utilizing the electricity energy stored in the super capacitor, and it allows RTG to turn off the diesel engine-electric generator set at the standby state thereby implementing the intermittent operation to reach the energy-saving result. The statistic data of the energy-saving tests shows that after using the energy-saving control system of the rubber-tyred container gantry crane in the invention, the oil-saving rate of the entire RTG can reach above 40%.

### Brief Description of Drawings

The specific embodiments of the invention will be described by incorporating the following drawings, wherein:
Fig. 1 is a principle diagram of an embodiment of an energy-saving control system of the rubber-tyred container gantry crane of the invention;
Fig. 2 is an operation panel schematic diagram of an embodiment of an energy-saving control system of the rubber-tyred container gantry crane of the invention; and
Fig. 3 is a structural schematic diagram of a static state switch of the embodiment as shown in Fig. 1.

### Detailed Description of Preferred Embodiments

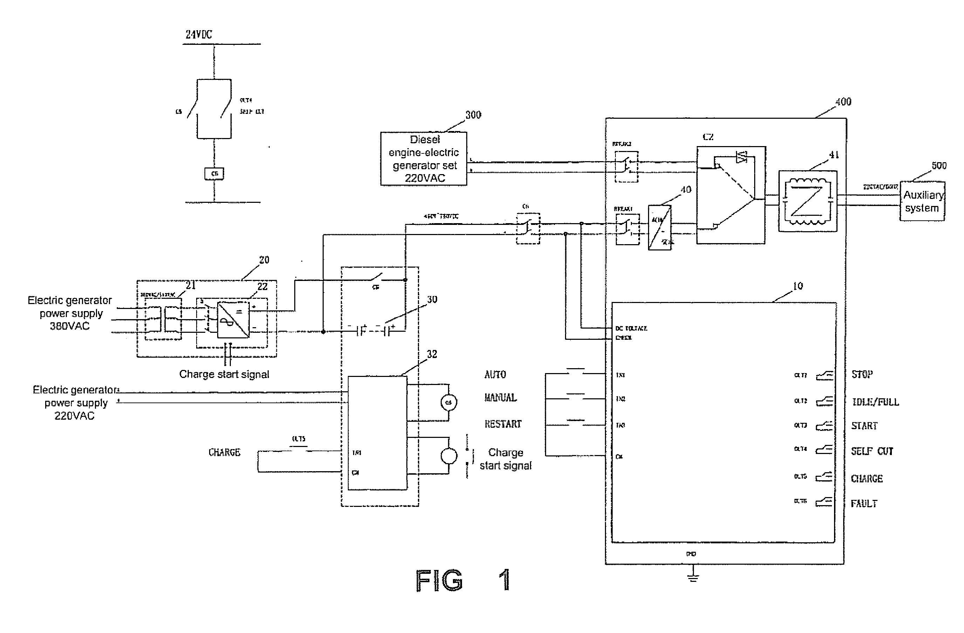

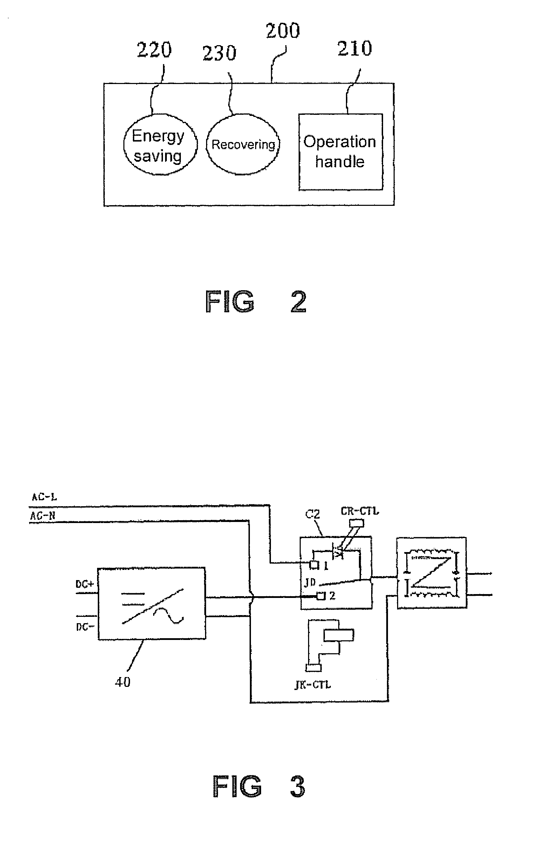

Please refer to Fig. 1. Fig. 1 is a principle diagram of an energy-saving control system of the rubber-tyred container gantry crane of the invention. Said energy-saving control system comprises a monitor unit 10, a charger 20, a super capacitor 30, a capacitor monitor module 32 and an inverter 40. The monitor unit 10 is connected to an operation panel 200 of the crane and a diesel engine-electric generator set 300, the control information from the operation panel 200 is received via the input ports IN1, IN2 and IN3 (Please refer to Fig. 2), wherein IN1 (AUTO) is an input for the action information of the operation handle 210, IN2 (MANUAL) is an input for the energy-saving button 220, and IN3 (RESTART) is an input for the recovery button 230. Whether the crane is at an idle state is decided by the monitor unit 10 via the operation panel 200, and the start and stop of the diesel engine-electric generator set 300 are controlled via the output ports OUT1 (STOP) and OUT3 (START), and running the diesel engine-electric generator set 300 at full speed or slowing down speed (one half of the full speed) is controlled via the output port OUT2 (IDLE/FULL), a charge signal is transmitted to the capacitor monitor module 32 via the output port OUT5 (CHARGE). Although the monitor unit 10 and the inverter 40 are disposed together in a power supply inverter 400 as shown in Fig. 1, but the monitor unit 10 can be disposed at any places other than the power supply inverter 400. The monitor unit 10 is composed of singlechips, PLCs (Programmable Logic Controller) or other controllers.

The super capacitor 30 is used as an energy storage device in the system, and supplies power to the auxiliary system 500 of the crane in most of the time except the inverter 40 fails, then the diesel engine-electric generator set 300 will supply power directly to the auxiliary system 500. However, it is not a restriction to the invention, the super capacitor 30 can supplies power to the auxiliary system 500 only during the time period that the diesel engine-electric generator set is stopped. The super capacitor (ultra capacitor) is a novel energy storage element appearing in recent years, its structure is extremely similar as that of the electrolytic capacitor or battery, the major difference is that the material of the electrode is different. The technologies of dual-layer electric principle and porous active carbon are employed in the super capacitor for providing extremely large surface area. With large surface area and the gap between the electrodes of the order of nanometer, the super capacitor has very high energy density. The power of the super capacitor is more than ten times larger than that of the battery, and the capability of storing the charges is higher than that of the ordinary capacitor, it has the features, such as rapid speed for charging and discharging, and long cycling life, and it is suitable for the repeatedly rapid charging and discharging required in the invention. In this embodiment, the super capacitor 30 is formed of a plurality of capacitors connected in series and/or in parallel, the capacitance of a single capacitor can be 10, 0000F.

During the power supplying process, the voltage of the super capacitor 30 shall not be lower than a minimum voltage, which is called the second preset value herein, in the present embodiment, said second preset value is 460 VDC. When the voltage of the super capacitor is higher than said second preset value, it can supply the power to the auxiliary system. In one condition when the super capacitor 30 is discharged to a voltage lower than the first preset value, then the super capacitor shall be charged for protecting it, said first preset value is higher than the second preset value in order to give a response time to the system (the start time of the diesel engine-electric generator set). This can be adjusted according to the concrete situation, the first preset value in the present embodiment is 500 VDC. In another condition, the crane stops to work (for example, off duty), and the diesel engine-electric generator set 300 has been turned off, at this time, if the voltage of the super capacitor 30 is lower than the third preset value of 480 VDC, then the system will control to disconnect the super capacitor 30 with the charger 20 and the inverter 40 for protecting the super capacitor 30 from discharging, this will be described in the description below.

The super capacitor 30 is connected to the charger 20 via a contactor C5, and is connected to the inverter 40 via a contactor C6. The contactor C5 is used as the first contactor of the system, while the contactor C6 is used as the second contactor of the system.

The capacitor monitor module 32 with the power being supplied by the diesel engine-electric generator set 300 is connected to the super capacitor for detecting the voltage of the capacitor, and it transmits or stops to transmit the charge start signal based on the voltage value of the capacitor so as to control the charging of the charger 20; the capacitor monitor module 32 is further connected to port OUT5 (CHARGE) of the monitor unit 10 for receiving the charge signal transmitted by the monitor unit 10 to transmit the charge start signal. The open and close of the contactor C5 is also controlled by the capacitor monitor module 32 for protecting the super capacitor. When the diesel engine-electric generator set 300 is started or at full speed, the electricity is supplied to said capacitor monitor module 32, and the contactor C5 is ensured to be closed when the voltage of the super capacitor 30 is higher than the second preset value; when the diesel engine-electric generator set stops or is at slowing down speed, the electricity does not supply to the capacitor monitor module 32, it makes the contactor C5 disconnect the connection between the super capacitor 30 and the charger 20. Said capacitor monitor module 32 can be formed of PLC.

The charger 20 comprises a transformer 21 and a voltage booster 22 for constant current charging and they are connected in series. The power is supplied to the charger 20 by the diesel engine-electric generator set 300, and the charge start signal from the capacitor monitor module 32 is received by it so that the super capacitor 30 is charged until full. In the present embodiment, it is considered that the super capacitor 30 has been fully charged when the voltage of the capacitor reaches 760 VDC.

The direct current input terminals of the inverter 40 are connected to two terminals of the super capacitor 30 via the contactor C6, said contactor C6 is controlled commonly by both the output port OUT4 (SELF OUT) of the monitor unit 10 and the contactor C5, as shown in Fig. 1. The output port OUT4 is a self-lock switch, when the output port OUT4 is closed, or the contactor C5 is closed, the contactor C6 obtains the power supply and is closed, the operation principle of this portion will be described in the description below. The inverter 40 converts the direct current of the super capacitor 30 to an alternating current of 220V, 50Hz, for supplying to the auxiliary system 500. The auxiliary system 500 comprises the following loads: one air conditioner, IT, the lightings and the sockets in the driving room, and the like; one air conditioner, IT, and lightings in the electricity room; and 4 projector-type lamps on the small gantry, and the footpath lamps of the machine.

A static state switch C2 is connected in series among the inverter 40, the diesel engine-electric generator set 300 and the auxiliary system 500. Please refer to Fig. 3, the static state switch C2 comprises a switching relay JD and a bi-directional thyristor S1. Wherein the bi-directional thyristor S1 is connected in parallel with the normal close contacts of the switching relay JD. The switching relay JD is controlled by a signal JK-CTL transmitted by the monitor unit 10, and the bi-directional thyristor S1 is controlled by a signal CR-CTL transmitted by the monitor unit 10. The diesel engine-electric generator set 300 is connected to the normal close contact 1 of the switching relay JD, and the inverter 40 is connected to the normal open contact 2 of the switching relay JD.

The monitor unit 10 will enable the inverter 40 when it detects that the inverter is OK, meanwhile, the diesel engine-electric generator set 300 tracks the frequency, phase, voltage of the alternating current supplied by the diesel engine-electric generator set 300. Once the switching conditions, such as phase lock, and the like, are completed, the control signal JK-CTL is transmitted so that the normal close contact 1 of the switching relay JD is switched to be opened, and the normal open contact 2 to be closed. Because the relay has an action time, so CR-CTL is closed after delaying a certain time, in this way, the switching action is performed intermittently from a "bypass operation state" (that is, the diesel engine-electric generator set 300 supplying the power) to a "inverting mode" (that is, the inverter 40 supplying the power), the delay of this switching is far less than 1 ms. During most of the time in which RTG operates, the monitor unit 10 makes the normal contact 2 be closed so that the inverter 40 is connected to the auxiliary system 500. When the conditions, such as the inverter 40 being failed, the output being overloaded, occur, a control signal CR-CTL is transmitted by the monitor unit 10 to cause the bi-directional thyristor S1 to be turned on immediately, and a signal JK-CTL is transmitted simultaneously so that the normal open contact 2 of the switching relay JD is switched to be opened, and the normal closed contact 1 to be closed, therefore the switching from the "bypass operation state" to the "inverting mode" can be realized, the delay of such switching is less than 3 ms.

Of course, when the above switching is required, a signal can also be transmitted via the button on the operation panel 300 to instruct the monitor unit 10 to implement.

The output terminals of the inverter 40 are isolated by an operating frequency transformer 41 to improve effectively the performance of anti-interference and the capability of anti load shock. The input terminals of the inverter 40 can be connected to the contactors BREAK1 and BREAK2 for separating the super capacitor 30 and the inverter 40 when required.

The operation flow process of the energy-saving control system of the rubber-tyred container gantry crane in the invention will be described below in detail:

When the crane is at a normal operation state, the diesel engine-electric generator set 300 operates at full speed, the capacitor monitor module 32 obtains the power supply and operates, as a protection measure, it is ensured that the contactor C5 turns on when the voltage value of the super capacitor 30 is higher than the second preset value (460V), the contactor C6 turns on under the control of contactor C5; the inverter 40 obtains the power supply, the monitor unit 10, contactor C6 turn on, and the self-lock switch OUT4 turns on to make the contactor C6 at a self-lock state, that is, it makes the contactor C5 turn off, and the contactor C6 still turn on. The monitor unit 10 controls simultaneously the static state switch C2 to make the inverter 40 connect with the auxiliary system 500; therefore, the direct current in the super capacitor 30 is converted by the inverter 40 to stable and reliable alternating power supply for supplying the auxiliary system 500. When the capacitor monitor module 32 detects that the voltage value of the super capacitor 30 is below the first preset value (500V), it transmits a charge start signal, the charger 20 charges the super capacitor 30 until it is full, the super capacitor 30 operates continuously to discharge, and cycling as this.

When the energy-saving button 220 is depressed by a driver, or the operation handle has not been operated for several minutes, an idle signal transmitted from the energy-saving button 220 is detected by the monitor unit 10, or that the operation handle 210 is at a no action state for several minutes is decided by the monitor unit 10, then the energy-saving mode will be entered automatically; in the energy-saving mode, a charge signal is transmitted to the capacitor monitor module 32 by the monitor unit 10 thereby a charge start signal is transmitted by the capacitor monitor module 32 so that the super capacitor 30 is charged by the charger 20, and the diesel engine-electric generator set 300 will be stopped when the fullness of the capacitor (that is, the voltage reaching 760V) is detected by the monitor unit 10. At this time, no power is supplied to the capacitor monitor module 32, the contactor C5 is opened, but the contactor C6 is still closed through its self-lock switch OUT4 (SELF-CUT), the direct current stored in the super capacitor 30 is converted by the inverter 40 to stable alternating operation power supply of 220V, 50hz for supplying to the auxiliary system 500 to be used by it.

When that the voltage of the super capacitor 30 is lower than the first preset value (500V) is detected by the monitor unit 10, the diesel engine-electric generator set 300 will be driven automatically to a full speed, meanwhile, when that the voltage of the capacitor 30 is lower than the first preset value (500V) is detected by the capacitor monitor module 32, or the signal OUT5 (CHARGE) transmitted from the monitor unit 10 is received, a charge start signal is transmitted, and the super capacitor 30 is charged by the charger 20, the diesel engine-electric generator set 300 will be stopped when the fullness of the capacitor (that is, the voltage reaching 760V) is detected by the monitor unit 10, and cycling as this. When the recovery signal transmitted by the recovery button 230 is received by the monitor unit 10, the diesel engine-electric generator set 300 is enabled rapidly to run at a full speed, or to run from the slowing down speed to the full speed, thereby returning to the normal operation mode.

The diesel engine-electric generator set 300 can operate intermittently through the above process to reach the energy-saving result.

During the operation process, the diesel engine-electric generator set 300 may be forced to stop because the crane is turned off by the operator, at this time, since the diesel engine-electric generator set 300 is stopped, the contactor C5 is opened due to no power being supplied to the capacitor monitor module 32, while the contactor C6 is still closed at this time, the super capacitor 30 may be still at a continuously discharging state. Thus, when that the voltage of the capacitor is lower than the third preset value (480V) is detected by the monitor unit 10, the self-lock switch OUT4 is opened, the contactor C6 is opened, and the super capacitor 30 and the inverter 40 are disconnected, so that the super capacitor 30 is protected from not discharging to a too low level. During the next initialization, since the voltage of the super capacitor 30 is still higher than the second preset value (460V), the contactor C5 is closed to restart the operation.

## Claims

1. An energy-saving control system of rubber-tyred container gantry crane, wherein the energy-saving control system controls the diesel engine-electric generator set to stop when the crane is idle, and supplies power on line to an auxiliary system of the crane by utilizing an energy storage device, said energy-saving control system comprising:
a super capacitor, for applying the energy stored during the running period of the diesel engine-electric generator set to supplypower to the auxiliary system of the crane when the diesel engine-electric generator set is stopped;
an inverter, connecting to the super capacitor and the auxiliary system, for converting the direct current of said the super capacitor to an alternating current for supplying the auxiliary system;
a capacitor monitor module for generating a charge start signal when a charge signal is received or the voltage of the super capacitor is detected to be lower than a first predetermined value;
a charger, being supplied by the diesel engine-electric generator set, for receiving the charge start signal and charging the super capacitor; and
a monitor unit, for deciding the crane being at an idle state and transmitting the charge signal to the capacitor monitor module, and for controlling the diesel engine-electric generator set to stop or to slow down when it detects the super capacitor has been fully charged; after stopping or slowing down the diesel engine-electric generator set, the monitor unit controls the diesel engine-electric generator set to start or to operate at full speed when it detects the voltage of the super capacitor is lower than the first predetermined value.

2. The system of Claim 1, wherein the monitor unit decides the crane being at an idle state in response to an idle signal, which is generated by an energy-saving button disposed on the operation panel of the crane.

3. The system of Claim 1, wherein the monitor unit decides the crane being at an idle state upon no operation of the operation handle of the crane for a predetermined period, and generates the charge signal.

4. The system of Claim 1, wherein the monitor unit controls the diesel engine-electric generator set to start or at full speed in response to a recovery signal, which is generated by a recovery button disposed on the operation panel of the crane.

5. The system of Claim 1, wherein further comprises a static state switch, the super capacitor and the diesel engine-electric generator set are connected to the inverter via the static state switch, and the static state switch is controlled by the monitor unit; when one of the super capacitor and the diesel engine-electric generator set can not supply power, the static state switch will turn to the other.

6. The system of Claim 1, wherein the static state switch is composed of a switching relay and a bi-directional thyristor being connected in parallel to the normal open contacts of the static state switch, the switching relay and bi-directional thyristor are controlled by the monitor unit.

7. The system of Claim 1, wherein further comprises a first contactor, the super capacitor is connected to the charger via the first contactor, and the first contactor is controlled by the capacitor monitor module.

8. The system of Claim 7, wherein the capacitor monitor module is supplied by the diesel engine-electric generator set; when the capacitor monitor module obtains the power supply it detects that the voltage of the super capacitor is higher than the second predetermined value and it causes the first contactor to be closed, when the capacitor monitor module fails to obtain the power supply, it causes the first contactor to be opened.

9. The system of Claim 1, wherein further comprises a second contactor, the super capacitor is connected to the inverter via the second contactor, and the second contactor is controlled by the first contactor and a self-lock switch disposed in the monitor unit; when the first contactor and/or self-lock switch are closed, the second contactor is closed.

10. The system of Claim 9, wherein the self-lock switch is closed when the closing of the second contactor caused by attraction is detected by the monitor unit, the self-lock switch is opened when the voltage of the super capacitor detected by the monitor unit is lower than a third predetermined value.
